Europäisches Patentamt

European Patent Office

Office européen des brevets

(19)

(11) **EP 1 536 204 A1**

(12) **DEMANDE DE BREVET EUROPEEN**

(43) Date de publication:
**01.06.2005 Bulletin 2005/22**

(51) Int Cl.$^7$: **G01B 11/02**, G08G 1/16

(21) Numéro de dépôt: **04300788.9**

(22) Date de dépôt: **15.11.2004**

(84) Etats contractants désignés:
**AT BE BG CH CY CZ DE DK EE ES FI FR GB GR HU IE IS IT LI LU MC NL PL PT RO SE SI SK TR**
Etats d'extension désignés:
**AL HR LT LV MK YU**

(30) Priorité: **27.11.2003 FR 0313896**

(71) Demandeur: **Peugeot Citroen Automobiles S.A.**
**78140 Vélizy Villacoublay (FR)**

(72) Inventeur: **Bailleux, François**
**VAL D'ALBIAN, 91400 (FR)**

(74) Mandataire: **Fernandez, Francis Lionel**
**PSA Peugeot Citroen,**
**Service Propriété Industrielle,**
**DINQ/DRIA/PPIQ/VPI,**
**Route de Gisy,**
**Centre Technique de Vélizy**
**78943 Vélizy Villacoublay Cedex (FR)**

(54) **Dispositif de mesure de la distance entre deux véhicules**

(57)    Dispositif de mesure destiné à équiper un véhicule routier (2) pour permettre de donner une estimation de la distance séparant ledit véhicule (2) d'un autre véhicule routier (12) qui le précède, caractérisé en ce qu'il comprend des moyens capteurs d'images (1) pour produire des images et un processeur d'image (3) pour, à partir d'une image fournie par lesdits moyens capteurs d'images (1), identifier une zone caractéristique de tout ou partie d'un véhicule routier (12), mesurer sur l'image les dimensions de ladite zone ainsi identifiée et déduire des mesures ainsi effectuées la distance du véhicule (12) aux moyens capteurs d'image (1).

FIG. 5

**Description**

La présente invention concerne un dispositif pour mesurer la distance entre deux véhicules.

Maintenir un intervalle suffisant entre deux véhicules circulant l'un derrière l'autre sur une même chaussée est un élément essentiel pour assurer un haut niveau de sécurité. En effet, en cas d'arrêt brusque du véhicule de tête, le véhicule suiveur ne pourra s'arrêter à temps que s'il existe une distance suffisante d'arrêt entre les deux véhicules. De fait, déjà de nombreuses législations routières préconisent le respect d'une distance de sécurité entre véhicules. Le respect d'une distance de sécurité a ainsi été rendu obligatoire lors des traversées de tunnels et ce, sous peine d'être verbalisé.

L'importance du respect d'un intervalle de sécurité pour prévenir les accidents a conduit les constructeurs d'automobiles ou de poids lourds à chercher à embarquer dans leurs véhicules des dispositifs destiner à évaluer l'intervalle séparant un véhicule du véhicule qui le précède. De tels dispositifs ont pour objet, soit d'informer directement le conducteur, soit encore de coopérer avec un système d'aide à la conduite.

On peut ainsi citer entre autres applications conçues par ces constructeurs: les dispositifs de suivi d'un véhicule avec une fonction de mesure de la distance qui sont capables de suivre continuellement un véhicule précédant le véhicule qu'ils équipent et ce, d'une manière automatique. On peut encore citer les dispositifs d'alerte d'un conducteur qui alertent ce dernier dès lors que le véhicule qui le précède est trop proche.

Les dispositifs embarqués qui ont été développé pour opérer une mesure de distance entre deux véhicules sont, à ce jour, chers et complexes ou bien encore peu performants. On peut ainsi citer l'utilisation d'un radar hyperfréquence ou encore d'un Lydar à balayage, ces capteurs sont envisagés dans le cas de l'ACC, régulateur de vitesse avec suivi du véhicule précédent si sa vitesse est inférieure à la consigne. Les coûts de ces capteurs sont très importants ce qui limite énormément leurs applications.

Les détecteurs ultrasons, bien qu'économique, n'ont pas une portée suffisante (0.3 à 10 m) or il faut pourvoir faire des mesures de distance dépassant la centaine de mètres. Quant aux détecteurs infrarouges, s'ils sont fixes ils risquent alors de perdre la cible dans les virages et, s'ils sont mobiles ou à balayage ils deviennent coûteux et complexes.

Pour ce qui est de l'approche optique par caméra(s) (CCD ou autres), différentes solutions ont été élaborées. On connaît notamment la méthode stéréoscopique : la distance est alors déduite de la comparaison des images reçues par chacune des caméras, il est toutefois nécessaire de prévoir des circuits appropriés pour faire d'une part, l'acquisition des images et ce, dans de larges conditions de luminosité et d'autre part, pour faire la détection des contours et comparer les données stéréoscopiques. La présente invention vise à proposer un dispositif simple et peu coûteux mais néanmoins performant qui permette d'évaluer la distance entre deux véhicules.

Le dispositif selon l'invention qui est destiné à être embarqué sur un véhicule routier et à permettre une estimation de la distance séparant ce véhicule d'un autre véhicule, comprend des moyens capteurs d'images pour produire des images de la chaussée, un processeur d'images pour analyser les images que lui adressent les capteurs d'images et opérer des calculs.

Selon l'invention, le dispositif est caractérisé en ce que le processeur d'image comprend des moyens pour identifier sur une image une zone caractéristique de tout ou partie d'un véhicule routier, des moyens pour mesurer les dimensions de la zone de l'image ainsi identifiée et des moyens de calcul pour déduire des mesures ainsi effectuées la distance du véhicule aux moyens capteurs d'image.

Selon une autre caractéristique du dispositif objet de la présente invention, les moyens d'identification sont adaptés pour identifier tout ou partie d'un équipement prédéterminé d'un véhicule routier. Selon une autre caractéristique du dispositif objet de la présente invention, les moyens d'identification sont adaptés pour identifier tout ou partie d'une plaque minéralogique de véhicule routier.

Selon une autre caractéristique du dispositif objet de la présente invention, les moyens d'identification sont adaptés pour identifier la zone où est inscrit le numéro d'immatriculation sur une plaque minéralogique.

Selon une autre caractéristique du dispositif objet de la présente invention, les moyens d'identification sont adaptés pour identifier le numéro d'immatriculation inscrit sur une plaque minéralogique. Selon une autre caractéristique du dispositif objet de la présente invention, les moyens d'identification procèdent par analyse de l'image qui leur est transmise et identification d'une zone prédéterminée tel qu'un rectangle d'une couleur donnée.

Selon une autre caractéristique du dispositif objet de la présente invention, les moyens d'identification vérifient la zone identifiée à partir des dimensions de cette dernière.

Selon une autre caractéristique du dispositif objet de la présente invention, les moyens de calcul considèrent la largeur de la zone ainsi identifiée sur l'image pour estimer la distance du véhicule aux moyens capteurs d'images.

Selon une autre caractéristique du dispositif objet de la présente invention, l'estimation de la distance D du véhicule aux moyens capteurs d'image est déduite de largeur de ladite zone identifiée sur l'image exprimée en nombre de pixels N par la formule :

$$D = K / N \text{ où } K \text{ est un nombre constant prédéterminé.}$$

Selon une autre caractéristique du dispositif objet de la présente invention, le processeur d'image fournit une information de temps de parcours en divisant ladite distance ainsi déduite par la vitesse de déplacement dudit dispositif :

la distance séparant les véhicules est alors exprimée sous la forme d'un temps de parcours T par la formule :

$$T = (K / N) / V \text{ où } V \text{ est la vitesse du véhicule équipé dudit dispositif.}$$

Selon une autre caractéristique du dispositif objet de la présente invention, les moyens capteurs d'images sont formés par une caméra à matrice CCD couleur, par exemple de type VGA.
L'invention sera mieux comprise à la lecture de la description qui va suivre, donnée uniquement à titre d'exemple et faite en se référant aux dessins annexés, sur lesquels :

- la Fig. 1 représente un véhicule équipé d'un dispositif de mesure selon l'invention.

- la Fig. 2 détaille le dispositif de mesure selon l'invention ;

- la Fig. 3 représente une image prise par le dispositif de mesure selon l'invention ;

- la Fig. 4 représente une plaque minéralogique de véhicule automobile ;

- la Fig. 5 représente le principe de la triangulation à la base de la présente invention.

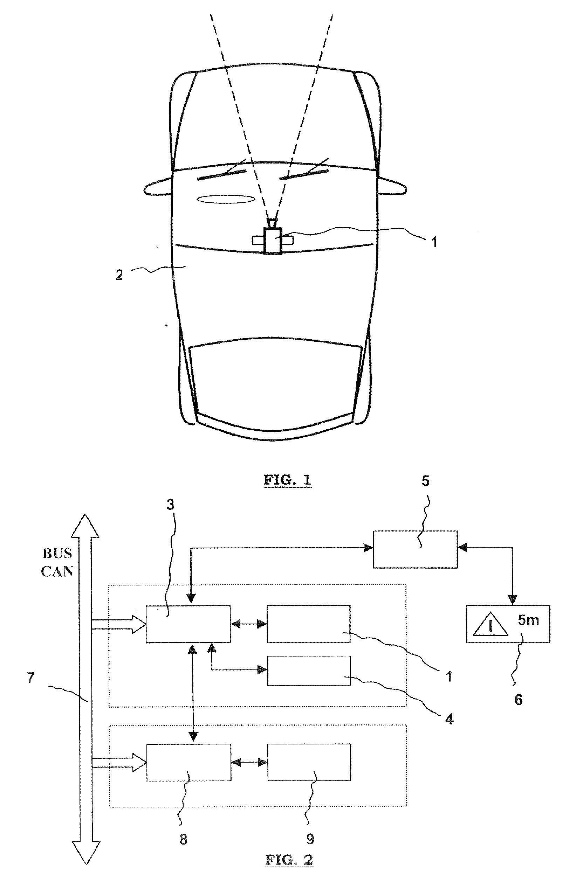

On a représenté à la figure 1 un dispositif de mesure donné à titre d'exemple non limitatif de l'invention. Le dispositif comprend des moyens capteurs d'images tel qu'une caméra référencée 1 disposée de manière à fournir une image de la route en avant du véhicule 2 sur lequel elle est embarquée. La caméra 1 est disposée de façon préférentielle au voisinage du plan médian du véhicule de façon à réduire les effets de parallaxe.
La caméra 1 sera également de préférence à l'intérieur du véhicule, soit intégrée dans la planche de bord, soit fixée au rétroviseur central. Le champ de prise de vue se trouve avantageusement dans la zone d'essuyage de manière à être utilisable par tous les temps. Cette dernière disposition permet par ailleurs à la caméra 1 de servir par ailleurs de détecteur de pluie pour commander la mise en route des essuie-vitres.
On utilisera une caméra à matrice ou barrette de capteurs à couplage de charges, dite caméra CCD, sensible dans un large spectre de fréquence et en particulier dans le visible. Les performances de la caméra non pas besoin d'être importantes. On peut ainsi utiliser une caméra VGA dont la résolution est de 640 X 480 pixels.
Le positionnement de la caméra et en particulier son inclinaison par rapport à l'horizontale sont choisis de façon à explorer la route devant le véhicule entre 5 et 150 m. De même, la focale de la caméra est choisie pour obtenir une bonne précision dans l'intervalle de mesure considéré. Selon l'exemple de réalisation illustré, on peut prendre une focale permettant un angle de prise de vue de 14 degrés.
En se reportant à la figure 2, la caméra 1 est reliée à un calculateur 3 comportant classiquement un microprocesseur et des mémoires 4. Ce calculateur qui a pour objet de traiter les images fournies par la caméra 1 et d'estimer la distance d'un véhicule pris dans le champ de la caméra, est lui-même connecté par exemple à un ordinateur de bord 5 pour fournir des informations à l'attention du conducteur sur un écran de visualisation approprié 6. Le calculateur 3 est par ailleurs connecté par l'intermédiaire d'un bus de multiplexage 7 à d'autres calculateurs 8 et à d'autres capteurs 9 équipant le véhicule 2 pour recevoir des informations véhicules telle que la vitesse du véhicule.
La figure 3 présente une image 10 prise par la caméra 1. Cette image montre un véhicule 12 précédant le véhicule 2 sur la chaussée 11. En autres équipements, le véhicule 12 est muni d'une plaque minéralogique 13 sur lequel est inscrit le numéro d'immatriculation du véhicule 12. Il est clair que la présence de la plaque 13 sur l'image 10 est caractéristique de la présence d'un véhicule 12 sur la chaussée devant le véhicule 2. En effet, tout véhicule routier à une plaque minéralogique et toute plaque minéralogique est portée par un véhicule routier (ou son prolongement, dans le cas d'une remorque...).

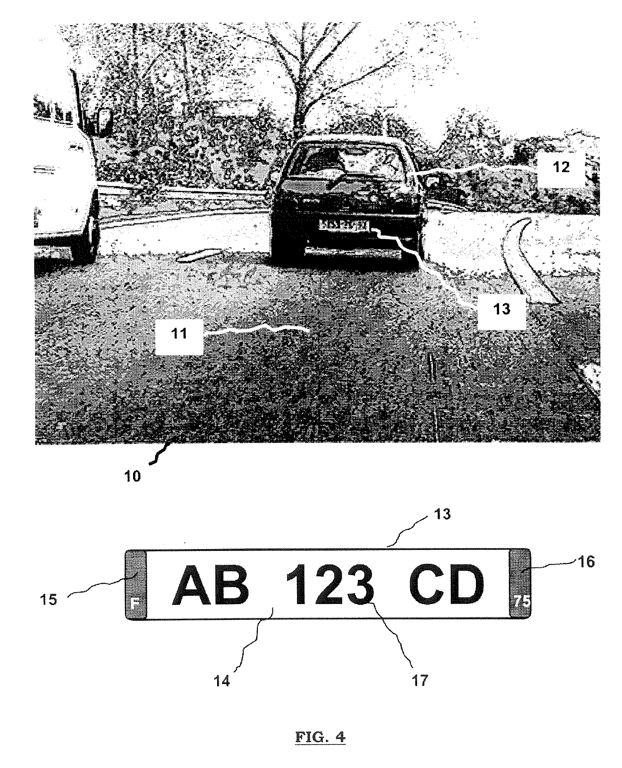

La figure 4 détaille la plaque minéralogique 13, encore appelée plaque d'immatriculation. Les plaques minéralogiques sur lesquelles sont inscrits les numéros d'immatriculation des véhicules sont obligatoires pour la quasi-totalité des véhicules à moteur et ce, depuis de nombreuses années. Ces plaques répondent à des prescriptions réglementaires notamment quant à leurs dimensions, couleurs ou encore éclairage la nuit.
Ces prescriptions nationales tendent par ailleurs à converger vers des standards internationaux. Ainsi, en Europe, les plaques des pays de la Communauté Economique Européenne seront, par exemple, toutes identiques. Selon cette norme communautaire, la plaque 13 est de type rectangulaire comportant un bandeau jaune réfléchissant 14 délimité par deux bandes latérales bleues 15 et 16. Le bandeau jaune 14 sur lequel est inscrit le numéro d'immatriculation 17 du véhicule mesure 0,46 m dans sa grande largeur et 0,1 m en hauteur.

La présence systématique des plaques minéralogiques du type de celle illustrée à la figure 4 ou autres, et leurs dimensions réglementaires répondant à des prescriptions légales rendent ces dernières utiles pour opérer une mesure de distance par des moyens assez simples (et donc robustes). En particulier, cela permet d'opérer une mesure de distance d'un véhicule à partir d'un traitement simple d'une image fournie par une caméra.

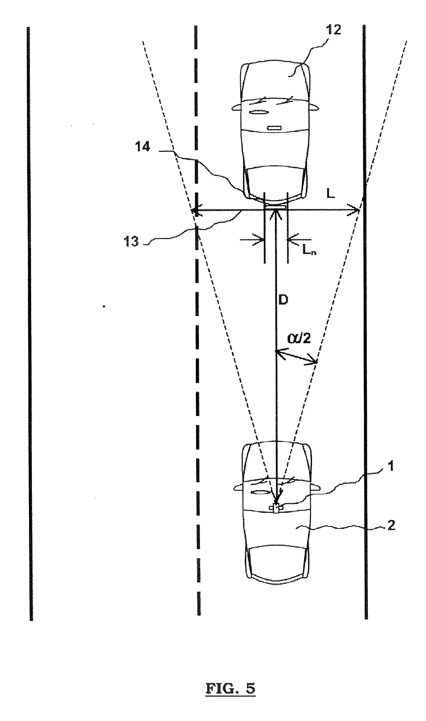

Le principe de la mesure opéré par le dispositif selon l'invention est plus particulièrement illustré par la figure 5.

Considérons la largeur L du paysage embrassé par la caméra 1 au droit de la plaque 13 dont la largeur normalisée du bandeau 14 est Ln. Sur l'image 10 produite par la caméra, la largeur L correspond à la totalité des 640 pixels de la caméra 1, tandis que la largeur Ln du bandeau 14 correspond à un nombre N1 de pixels. Les principes de la trigonométrie et de l'optique géométrique nous enseignent que l'on a :

$$(3) \; L = Ln \times 640 / N1$$

On a par ailleurs D la distance de la caméra 10 à la plaque 21 donnée par la formule :

$$(4) \; D = (L / (2 \times tg(\alpha / 2))$$

Avec $\alpha$ angle de vision de la caméra (dans l'exemple considéré $\alpha$ vaut 14°)
En remplaçant L dans la formule 4) par son expression donnée dans la formule 3) on a alors :

$$(5) \; D = ((Ln \times 640) / (N1 \times (2 \times tg(\alpha / 2)))$$

on a donc :

$$(6) \; D = K / N1 \text{ avec K constante}$$

K dans l'exemple considéré vaut 1200 m/pixel $((0,46 \times 640) / (2 \times tg(7°))$ D'où D = 1200 / N1
D est ainsi directement inversement proportionnel au nombre de pixels couvert par le bandeau 14.

D'où si on fait le rapport entre deux distances distinctes D1 et D2 correspondant à des nombres de pixels respectifs N11 et N12 pour le bandeau a plaque 21 :

$$(7) \; D1 = D2 \times N12/N11$$

Une autre façon pour déterminer le K de la formule (6) consiste donc à mesurer le nombre de pixels N12 concernés par le bandeau 14 à une distance prédéterminée D2. On a alors K = D2 x N12

Bien évidemment ce qui est vrai pour la largeur est vrai pour la hauteur. Si Nh est le nombre de pixel correspondant à la hauteur du bandeau 14, alors :

$$(8) \; D = K' / Nh \text{ avec K' constante}$$

et donc D1 = D2 x Nh2/Nh1

On peut donc également avec le nombre de pixels représentant l'aire couverte par le bandeau 14 :

$$(9) \; D1 = D2 \times ((N12 \times Nh2) / (N11 \times Nh1))^{1/2}$$

Ainsi la méthode mise en oeuvre par le dispositif suivant l'invention est la suivante. La caméra 1 adresse périodiquement au calculateur 3 des images de la route située devant le véhicule 2. Le calculateur 3 opère alors l'analyse de la zone centrale de l'image, zone correspondant à la chaussée 11 sur laquelle circule le véhicule 2, pour identifier la présence d'un éventuel rectangle jaune 14 caractéristique d'une plaque d'immatriculation 13 et donc d'un véhicule 12. Un tel rectangle étant reconnu, le calculateur 3 opère ensuite une mesure des dimensions de ce rectangle sur l'image sous la forme de la détermination du nombre de pixel N1 correspondant à la largeur du rectangle et éventuellement du nombre de pixels Nh correspondant à la hauteur Nh du rectangle. La mesure de la hauteur Nh permet de calculer le ratio N1 /Nh et de vérifier pour confirmation qu'il s'agit bien là d'un bandeau de plaque d'immatriculation (Nl/Nh dans le cas d'une plaque communautaire normalisée devant être égal ou voisin de 4,6). Une autre vérification peut consister à s'assurer que le rectangle jaune est bien entouré par 2 rectangles bleus ou bien encore à comparer la largeur N1 du bandeau 14 à celle du véhicule 12.

Le calculateur 3 déduit ensuite la distance D séparant par la formule D= K/Nl avec K constante prédéterminée mise en mémoire du calculateur et caractéristique de la plaque 13.

Il est à noter que connaissant la distance D il est alors possible de calculer un temps de parcours T séparant les deux véhicules 2 et 12. Pour ce faire, il suffit que le calculateur 3 obtienne d'un calculateur 8 approprié la vitesse V exprimée en m/s du véhicule 2 on a alors :

$$(10)\ T = D / V$$

Application numérique : si V= 130 km/h soit 36,1 m/s alors si D = 72 m (soit N1 17 pixels avec K = 1200) et bien T vaut 2 s.

Le premier tableau ci-joint fournit les intervalles de sécurité à respecter si on veut un conserver un temps de parcours de 2 s :

| V km/h | V m/s | D m à 2s | Nb Pixel |
|--------|-------|----------|----------|
| 60 | 16,7 | 33 | 36 |
| 80 | 22,2 | 44 | 27 |
| 90 | 25,0 | 50 | 24 |
| 110 | 30,6 | 61 | 20 |
| 130 | 36,1 | 72 | 17 |
| 150 | 41,7 | 83 | 14 |
| 180 | 50,0 | 100 | 12 |

Le deuxième tableau fournit lui les distances et temps en fonction du nombre de pixels à la vitesse de 90km/h :

| Véhicule à 90km/h | | |
|---|---|---|
| Nb Pixel | D m | Temps sec |
| 15 | 80,0 | 3,200 |
| 16 | 75,0 | 3,000 |
| 17 | 70,6 | 2,824 |
| 18 | 66,7 | 2,667 |
| 19 | 63,2 | 2,526 |
| 20 | 60,0 | 2,400 |
| 21 | 57,1 | 2,286 |
| 22 | 54,5 | 2,182 |
| 23 | 52,2 | 2,087 |
| 24 | 50,0 | 2,000 |
| 25 | 48,0 | 1,920 |
| 26 | 46,2 | 1,846 |
| 27 | 44,4 | 1,778 |

| | | |
|---|---|---|
| 28 | 42,9 | 1,714 |
| 29 | 41,4 | 1,655 |
| 30 | 40,0 | 1,600 |
| 31 | 38,7 | 1,548 |
| 32 | 37,5 | 1,500 |

Les informations distance et/ou temps de parcours élaborées par le calculateur 3 sont ensuite exploitées par exemple par un système d'information du conducteur à travers un calculateur de bord 5 et d'un afficheur 6 qui affiche un signal d'alerte à destination du conducteur sitôt par exemple que le temps de parcours entre le véhicule 2 et 1 véhicule qui le précède est inférieur à 2s.

Dans l'hypothèse ou plusieurs types de plaques coexisteraient, le calculateur 3 dispose alors en mémoire de la caractérisation des différentes plaques en circulation, le processus opératoire consiste alors tour d'abord à reconnaître la présence d'une plaque minéralogique sur l'image puis ensuite à en identifier le type, de façon à utiliser la valeur de seuil K correspondante dans le calcul de la distance.

Bien évidemment, la mesure de la largeur N1 peut être opérée à partir de plusieurs images successives et filtration des différentes mesures obtenues.

Il est à noter que dans le cas du traitement successif des images et de leur comparaison, il peut être possible de caractériser le sens de roulage du véhicule 12 par rapport au véhicule 2.

Le système qui vient d'être décrit est particulièrement simple et économique à mettre en oeuvre.

Bien évidemment l'invention n'est pas limitée au mode de réalisation décrit ci-dessus.

Ainsi, il est possible d'opérer la mesure non pas sur le bandeau 14 mais sur toute la plaque 13 ou bien encore sur le seul numéro d'immatriculation 17 inscrit sur la plaque 13. En effet, dans le cas du numéro d'immatriculation ce dernier quelle que soit sa composition est généralement disposer pour occuper sensiblement la même place sur la plaque. On peut donc, en première approximation, supposer que sa longueur est sensiblement constante et vaut par exemple 0,4 m.

Ainsi, il n'est par ailleurs pas nécessaire de prévoir une caméra spécifique pour la mesure. La caméra utilisée peut servir à d'autres fonctions comme par exemple la détection de la luminosité pour l'allumage automatique des phares, la détection de la pluie pour l'actionnement des essuie-glace, la détection de la buée pour le désembuage ou encore pour opérer la détection des marquages de chaussée (lignes blanches, etc.) pour réaliser un suivi de trajectoire.

Ainsi, le principe précité concernant la mesure d'un équipement normalisé de véhicule automobile en l'occurrence une plaque minéralogique pour en déduire la distance du véhicule peut trouver d'autres applications avec d'autres équipements ou directement avec le gabarit du véhicule dans la mesure ou il est possible de reconnaître et d'identifier ces équipements ou ces gabarits et d'en déduire ensuite leur éloignement à partir de leur taille sur l'image et leurs dimensions respectives.

**Revendications**

1. Dispositif de mesure destiné à équiper un véhicule routier (2) pour permettre de donner une estimation de la distance séparant ledit véhicule (2) d'un autre véhicule routier (12) qui le précède, **caractérisé en ce qu'**il comprend des moyens capteurs d'images (1) pour produire des images et un processeur d'image (3) pour, à partir d'une image fournie par lesdits moyens capteurs d'images (1), identifier une zone caractéristique de tout ou partie d'un véhicule routier (12), mesurer sur l'image les dimensions de ladite zone ainsi identifiée et déduire des mesures ainsi effectuées la distance du véhicule (12) aux moyens capteurs d'image (1).

2. Dispositif de mesure selon la revendication 1, **caractérisé en ce que** ledit processeur d'image (3) est adapté pour identifier tout ou partie d'un équipement (13) prédéterminé d'un véhicule routier (12).

3. Dispositif de mesure selon la revendication 2, **caractérisé en ce que** ledit processeur d'image (3) est adapté pour identifier tout ou partie d'une ou partie d'une plaque minéralogique (13) de véhicule routier (12).

4. Dispositif de mesure selon la revendication 3, **caractérisé en ce que** ledit processeur d'image (3) est adapté pour identifier la zone (14) où est inscrit le numéro d'immatriculation (17) sur une plaque minéralogique (13).

5. Dispositif de mesure selon la revendication 3, **caractérisé en ce que** ledit processeur d'image (3) est adapté pour identifier le numéro d'immatriculation (17) inscrit sur une plaque minéralogique (13).

6. Dispositif de mesure selon la revendication 1, **caractérisé en ce que** ledit processeur d'image (3) est adapté pour analyser de l'image qui lui est transmise et identifier une zone prédéterminée tel qu'un rectangle d'une couleur donnée.

7. Dispositif de mesure selon la revendication 1, **caractérisé en ce que** ledit processeur d'image (3) est adapté pour vérifier la zone identifiée à partir des dimensions de cette dernière.

8. Dispositif de mesure selon la revendication 1, **caractérisé en ce que** ledit processeur d'image (3) considère la largeur de ladite zone pour estimer la distance du véhicule (12) aux moyens capteurs d'images (1).

9. Dispositif de mesure selon la revendication 8, **caractérisé en ce que** ledit processeur d'image (3) considère la largeur de ladite zone exprimée en nombre N1 de pixels pour estimer la distance D du véhicule (12) aux moyens capteurs d'images (1) par la formule :

$$D = K / N \text{ où } K \text{ est un nombre constant prédéterminé.}$$

10. Dispositif de mesure selon la revendication 1, **caractérisé en ce que** ledit processeur d'image (3) fournit une information de temps de parcours en divisant ladite distance ainsi déduite par la vitesse de déplacement dudit dispositif.

FIG. 1

FIG. 2

**FIG. 4**

**FIG. 5**

**Office européen des brevets**

**RAPPORT DE RECHERCHE EUROPEENNE**

Numéro de la demande

EP 04 30 0788

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | DE 199 40 723 A (DAIMLER CHRYSLER AG) 8 mars 2001 (2001-03-08) | 1,2,6 | G01B11/02 G08G1/16 |
| A | * colonne 7, ligne 11 - colonne 9, ligne 24 * | 3-5,7-10 | |
| | ----- | | |
| Y | JP 2003 331397 A (MITSUBISHI ELECTRIC CORP) 21 novembre 2003 (2003-11-21) * le document en entier * | 1,2,6 | |
| | ----- | | |
| Y | PATENT ABSTRACTS OF JAPAN vol. 1995, no. 03, 28 avril 1995 (1995-04-28) -& JP 06 333200 A (TOSHIBA CORP;OTHERS: 01), 2 décembre 1994 (1994-12-02) * abrégé * | 1,2,6 | |
| | ----- | | |

**DOMAINES TECHNIQUES RECHERCHES (Int.Cl.7)**

G01B
G08G
G08B

Le présent rapport a été établi pour toutes les revendications

| Lieu de la recherche | Date d'achèvement de la recherche | Examinateur |
|---|---|---|
| La Haye | 3 janvier 2005 | Ramboer, P |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 30 0788

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-01-2005

| Document brevet cité au rapport de recherche | | Date de publication | Membre(s) de la famille de brevet(s) | | Date de publication |
|---|---|---|---|---|---|
| DE 19940723 | A | 08-03-2001 | DE WO EP JP | 19940723 A1<br>0115928 A1<br>1212207 A1<br>2003527989 T | 08-03-2001<br>08-03-2001<br>12-06-2002<br>24-09-2003 |
| JP 2003331397 | A | 21-11-2003 | AUCUN | | |
| JP 06333200 | A | 02-12-1994 | AUCUN | | |

EPO FORM P0460

Pour tout renseignement concernant cette annexe : voir Journal Officiel de l'Office européen des brevets, No.12/82